(19) Europäisches Patentamt
European Patent Office
Office européen des brevets

(11) Publication number: **0 420 662 B1**

(12) **EUROPEAN PATENT SPECIFICATION**

(45) Date of publication of patent specification: **25.01.95**

(51) Int. Cl.$^6$: **C08L 27/16**, C08K 13/02, //(C08K13/02,3:22,5:13,5:19, 5:19)

(21) Application number: **90310631.8**

(22) Date of filing: **28.09.90**

# (54) Fluoroelastomer compositions containing a tetraalkylammonium metal adhesion promoter.

(30) Priority: **28.09.89 US 413868**

(43) Date of publication of application:
**03.04.91 Bulletin 91/14**

(45) Publication of the grant of the patent:
**25.01.95 Bulletin 95/04**

(84) Designated Contracting States:
**BE DE FR GB IT NL**

(56) References cited:
**EP-A- 0 333 062**
**FR-A- 2 091 806**

(73) Proprietor: **E.I. DU PONT DE NEMOURS AND COMPANY**
**1007 Market Street**
**Wilmington**
**Delaware 19898 (US)**

(72) Inventor: **Wilson, Janet M.**
**2321 W. 18th Street**
**Wilmington,**
**Delaware 19806 (US)**
Inventor: **Tabb, David Leo**
**2802 Bexley Court**
**Wilmington,**
**Delaware 19808 (US)**

(74) Representative: **Myerscough, Philip Boyd et al**
**J.A.KEMP & CO.**
**14, South Square**
**Gray's Inn**
**London WC1R 5LX (GB)**

**EP 0 420 662 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to vinylidene fluoride based fluoroelastomer compositions which contain certain crosslinking agents, a crosslinking accelerator, an acid acceptor and a metal adhesion promoter that demonstrate an improved adhesion to metal when cured.

Fluoroelastomer compositions have been modified with a wide variety of compounds to enhance curing characteristics and other properties. For example, US-A-3,884,877 teaches vinylidene fluoride elastomer formulations including a triorganophosphorus oxide to facilitate curing. The composition also incorporates a quaternary phosphonium or ammonium compound, a hydroxy or amino compound, and optionally acid acceptor or base. However, this reference does not suggest a compound having improved metal adhesion.

Related US-A-3,655,727 and US-A-3,988,502 concern curing systems for vinylidene fluoride elastomers wherein certain elastomeric copolymers are admixed with quaternary compounds and aromatic hydroxy or amino compounds to enhance compression set properties therein. However, these references do not suggest compounds having improved metal adhesion.

EP-A-333062 discloses fluoroelastomer compositions that are crosslinked by bisphenols or polyhydroxy phenols and include divalent metal oxides or hydroxides as acid acceptors and particular quaternary ammonium salt accelerators. These compositions do not cause the formation of mold deposits after repeated moldings in the same cavity. However, the present invention represents an improvement over this application in that it promotes adhesion of the fluoroelastomer to metal.

Fluoroelastomer curing compositions wherein the hydroxylated crosslinking agent and the quaternary phosphonium or ammonium salt are prereacted before addition to the fluoroelastomer, so as to give a salt of the quaternary compound and the hydroxylated crosslinking agent, are also not well adhered to metal when cured, in contrast to the present invention.

EP-A-339126 discloses fluoroelastomer compositions that are crosslinked with bisphenol and polyhydroxy phenol and further utilize a quaternary phosphonium accelerator and a tetraalkylammonium halide adhesion promoter. However, the present invention uses a different cure system than this application.

FR-A-2091806 discloses a fluoroelastomer composition which comprises (A) an elastomeric copolymer of vinylidene fluoride and at least one other fluorinated monomer, (B) at least one oxide or hydroxide of a divalent metal, (C) an aromatic polyol as crosslinking agent and (D) a quaternary ammonium salt as crosslinking accelerator.

The present invention is directed to a fluoroelastomer composition that has enhanced adhesion to metal when cured which comprises:

(a) an elastomeric copolymer of vinylidene fluoride and at least one other fluorinated monomer;

(b) 0.1 to 5 parts by weight of a crosslinking agent selected from a bispehnol and a polyhydroxy phenol of the formula

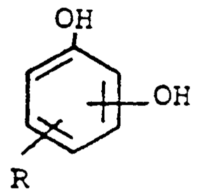

or

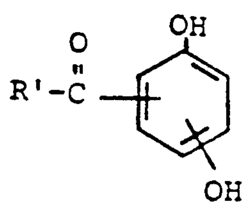

where R is hydrogen, alkyl or aryl and R' is alkyl or aryl;

(c) 0.1 to 3 parts by weight of a crosslinking accelerator which is a quaternary ammonium salt of the formula $R''_4N^+X^-$ wherein each R" is independently an alkyl group of 2-10 carbon atoms or an aryl group of 7-10 carbon atoms and $X^-$ is selected from fluoride, dihydrogen phosphate, periodate, acetate, hydrogen sulfate, methane sulfonate and toluene sulfonate;

(d) 0.5 to 20 parts by weight of an acid acceptor which is at least one divalent metal oxide or hydroxide; and

(e) 0.02-0.8 parts by weight of a metal adhesion promoter which is a tetraalkylammonium halide where each alkyl group contains 2-10 carbon atoms and the halide is chloride, bromide or iodide,

the crosslinking agent (b) and the crosslinking accelerator (c) optionally having been prereacted in a 1/1 molar ratio, all parts by weight being based on 100 parts by weight of the elastomeric copolymer (a).

The present invention is also directed to a process for providing a metal substrate with an adherent coating which comprises applying a composition of the invention to a surface of the metal substrate and

curing the composition.

The composition of the invention can be prepared by a process which comprises mixing an elastomeric copolymer of vinylidene fluoride and at least one other fluorinated monomer with the cross linking agent and the cross linking accelerator described above. The acid acceptor and metal adhesive promoter as described above are also added.

The fluoroelastomer compositions are especially useful when cured in contact with metal, for example, to form a shaft seal in which the fluoroelastomer forms a strong bond with the metal surface.

Among the vinylidene fluoride copolymers useful with this invention are copolymers with hexafluoropropylene, chlorotrifluoroethylene, 1-hydropentafluoroethylene or 2-hydropentafluoroethylene and copolymers of vinylidene fluoride, tetrafluoroethylene and hexafluoropropylene or 1-hydro- or 2-hydropentafluoropropylene. "Copolymer", as used herein, means the product of copolymerizing two or more monomers. Especially preferred are vinylidene fluoride/hexafluoropropylene copolymers in which the monomers are combined in a molar ratio of about 88:12 to 50:50, and vinylidene fluoride/hexafluoropropylene/tetrafluoroethyleneterpolymers of the type disclosed in US-A-2,968,649. The fluoroelastomer can also be any other vinylidene fluoride containing copolymers which can be cured to useful products, for example, copolymers of vinylidene fluoride and hexafluoropropylene or pentafluoropropylene or linear perfluoro alpha olefins with dichlorodifluoroethylene, chlorofluoroethylene, chlorotrifluoroethylene, bromotetrafluorobutene (polymers of bromotetrafluorobutene are disclosed in US-A-4,214,060), and with fluorinated alkyl vinyl ethers; the latter can be illustrated by copolymers of vinylidene fluoride, hexafluoropropylene and a perfluoro(alkyl vinyl ether).

Useful copolymers of vinylidene fluoride and 1,2,3,3,3-pentafluoropropylene are described in US-A-3,331,823, and copolymers of these two components with tetrafluoroethylene are described in US-A-3,335,106.

The crosslinking agents used in the fluoroelastomer compositions are, in one exemplification, bisphenols usually having the formula

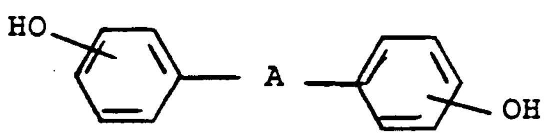

where A is a stable divalent radical, such as

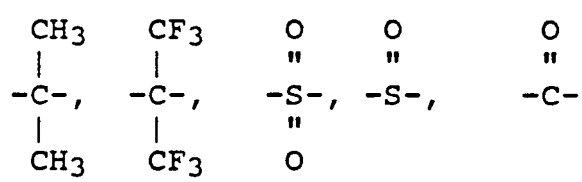

Representative bisphenols include 4,4'-hexafluoroisopropylidene diphenol, 4,4'-isopropylidene diphenol and 4,4'-dihydroxydiphenyl sulfone. The crosslinking agent can also be a polyhydroxy phenol of the formula:

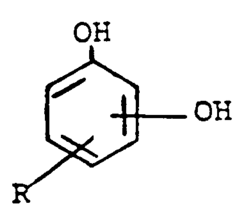 or 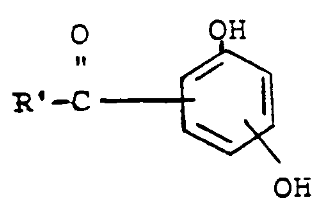

where R is H or an alkyl group having 1-4 carbon atoms or an aryl group having 6-10 carbon atoms and R' is an alkyl group containing 1-4 carbon atoms or an aryl group containing 6-10 carbon atoms. Blends of two or more crosslinking agents may be used in the present invention.

Preferred bisphenols and polyhydroxy phenol crosslinking agents include 4,4′-hexafluoroisopropylidene diphenol; 4,4′-dihydroxydiphenyl sulfone; 4,4′-dihydroxybenzophenone; 2,4-dihydroxybenzophenone; 1,4-hydroquinone; resourcinol.

The crosslinking agent is added to the composition in the amount of from 0.1-5 parts by weight per 100 parts of elastomeric copolymer, preferably 0.6-2.5 parts.

The curing systems used with the fluoroelastomers contain, in addition to the crosslinking agent, a crosslinking accelerator that is a quaternary ammonium salt of the formula $R''_4NB^+X^-$,wherein R" in each instance is independently an alkyl group of 2-10 carbon atoms or an aryl group of 8-10 carbon atoms, preferably an alkyl group of 2-4 carbon atoms, most preferably 4 carbon atoms, and $X^-$ is selected from the group consisting of fluoride, dihydrogen phosphate, periodate, acetate, hydrogen sulfate, methane sulfonate, or toluene sulfonate. Most preferably, each R" is an alkyl group that contains 4 carbon atoms, i.e., n-butyl. Tetrabutylammonium hydrogen sulfonate is a preferred crosslinking accelerator.

In an optional embodiment the crosslinking agent and the tetraalkylammonium accelerator may be prereacted to form a 1/1 (molar) reaction product that is a tetraalkylammonium salt having an anion of a bisphenol or polyhydroxy phenol. Examples of the latter are the 1:1 adducts obtained by reacting tetraalkylammonium hydroxide with hydroquinone and the 1:1 adducts obtained by reacting tetraalkylammonium hydroxide with 4,4′-hexafluoroisopropylidene diphenol.

The crosslinking accelerator is added to the composition in the amount of from 0.1-3 parts by weight per 100 parts of fluoroelastomer, preferably 0.1-1.5 parts.

The fluoroelastomer composition also contains, as a metal adhesion promoter, a tetraalkylammonium chloride, bromide or iodide wherein each alkyl group contains, independently, 2-10 carbon atoms, preferably 3-6 carbon atoms, most preferably 4 carbon atoms. The tetraalkylammonium halide is present in the fluoroelastomer composition in the amount of from 0.02-0.8 parts by weight per hundred parts of elastomeric copolymer, preferably 0.05-0.2 parts by weight. When these small amounts of tetraalkylammonium halides are present in the fluoroelastomer composition that is cured by a crosslinking system containing a selected tetraalkylammonium salt and a polyhydroxy phenol of the invention to form, for example, a shaft seal, the composition adheres strongly to the metal component of the shaft seal.

The fluoroelastomer composition of the invention will also contain one or more metal compounds selected from the group of divalent metal oxides, such as magnesium oxide or calcium oxide or lead oxide, or a divalent metal hydroxide such as barium or calcium hydroxide. The amount of the metal compound added is 0.5-20 parts by weight per 100 parts of elastomeric copolymer, 2-15 parts being preferred.

The metal compound serves a dual purpose. It scavenges certain gaseous and acidic materials which are evolved during vulcanization and can chemically attack and weaken the fluoroelastomer. It also provides the fluoroelastomer with long term aging stability. When using a metal oxide, it can be compounded with the fluoroelastomer stock either free or as a metal oxide complex or chelate with organic complexing agents and ligands, such as cyclic polyethers, amines, phosphines, ketones, alcohols, phenols, or carboxylic acids.

The fluoroelastomer compositions can also contain conventional fillers, in amounts up to about 100 parts by weight per 100 parts of fluoroelastomer, usually about 15-50 parts per 100 parts of fluoroelastomer. Representative fillers include carbon black and various mineral fillers, such as barium sulfate, calcium carbonate and titanium dioxide. Processing aids such as tetramethylenesulfone and waxes may also be present.

The compositions of this invention may be compounded by known mixing procedures using, for example, high shear mixing devices such as a Banbury internal mixer or a two-roll rubber mill, to intimately disperse the ingredients at mildly elevated temperatures e.g., 90-120°C for a few minutes, e.g., 2-6 minutes.

It is the combination of the several components of the inventive composition claimed herein that results in a vinylidene fluoride-based fluoroelastomer that shows a desirable adhesion to metal when cured.

The following examples further illustrate the invention, in which all parts are by weight unless otherwise specified.

Test for Adhesion

1 inch x 4 inch (2.5 x 10.2 cm) rubber strips were died out from stock sheeted to a thickness of 0.10 inch (2.5 mm). The surfaces of 1 x 4 inch (2.5 x 10.2 cm) plain carbon steel strips were roughened by sand blasting with 200 mesh alumina grit. After the metal strips were degreased they were dipped in organosilane primer dissolved in methanol (a 1/1 [v/v] Chemlok 607/methanol solution). The metal strips were then air dried and put in an air oven at 150°C for 30 minutes. A rubber strip was compression molded onto a primed metal strip at 190°C for 5 minutes. Adhesion was evaluated immediately upon removal from the

press (results listed under "hot") and also at room temperature the next day (results listed under "cold"). Adhesion was evaluated by attempting to remove the rubber from the steel strip, and an adhesion rating from 1 to 5 was given. A rating of 1 indicates complete adhesion failure: no rubber is bonded to metal. A rating of 5 indicates a complete metal bond: all of the rubber is bonded to the metal.

## EXAMPLES

### Examples 1-4

The fluoroelastomer composition of Example 1 was prepared by adding to an internal mixer (B-Banbury) 1500 grams (100 parts) of a terpolymer of vinylidene fluoride, hexafluoropropylene and tetrafluoroethylene (45/30/25 by weight) having a Mooney Viscosity, $ML_{1+10}$ at 121 °C of 65, 375 grams (25 parts) of MT carbon black, 45 grams (3 parts) of magnesium hydroxide, 90 grams (6 parts) of calcium hydroxide, 4.5 grams (0.3 parts) of the crosslinking accelerator tetrabutylammonium hydrogen sulfate (micronized), 22.5 grams (1.5 parts) of the crosslinking agent 4,4′-hexafluoroisopropylidene diphenol (micronized), 7.5 grams (0.5 parts) of Carnauba Wax and 0.75 grams (0.05 parts) of tetrabutylammonium bromide adhesion promoter. The compound was mixed until a chart temperature of 104 °C was reached in about 2.5 minutes. The compound was then discharged from the mixer and placed on a two-roll rubber mill which was used to prepare the sheet stock.

In a similar manner, fluoroelastomer Examples 2-4 were prepared as described above except these examples contained 1.5 grams, 3.0 grams, and 7.5 grams, respectively (0.1, 0.2, and 0.5 parts, respectively) of tetrabutylammonium bromide used in Example 1. General physical properties for Examples 1-4 are shown in Table I.

### Control Example 1

An experiment was conducted according to the procedure outlined in the previous examples except that no metal adhesion promoter tetrabutylammonium bromide was added.

A comparison of Examples 1-4 with Control Example 1 revealed that adhesion properties of the composition generally increased with the addition of the tetraalkylammonium bromide.

### Example 5

The procedure described above in Example 1 was repeated except that 3.0 grams (0.2 parts) of tetrabutylammonium iodide was used in place of tetrabutylammonium bromide. The general physical properties were similar to those in Table 1 and the sample had a "hot" adhesion value of 4 and a "cold" adhesion value of 5.

### Example 6

The procedure described above in Example 1 was repeated except that 3.0 grams (0.2 parts) of tetrabutylammonium chloride was used in place of tetrabutylammonium bromide. The general physical properties were similar to those in Table 1 and the sample had a "hot" adhesion value of 4 and a "cold" adhesion value of 5.

Examples 5 and 6 demonstrate that the adhesion promoter is also effective versus Control Example 1 when the halide substituent is iodide or chloride.

### Examples 7-9 and Control Examples 2-4

The procedure of Example 1 was followed for each of these Examples except that tetrabutylammonium fluoride, tetrabutylammonium dihydrogen phosphate and tetrabutylammonium periodate were used in Examples 7, 8 and 9, respectively, as the crosslinking accelerator, and 3 parts of calcium hydroxide were used instead of 6 parts. Each sample contained 0.2 parts of tetrabutylammonium bromide as an adhesion promoter. Metal adhesion data are shown in Table 2. A comparison of the metal adhesion test results for each Example to the corresponding Control Example revealed that adhesion properties of the composition increased with the addition of the tetrabutylammonium bromide for compositions using the selected crosslinking accelerators of the invention.

Examples 10-13 and Control Example 5

The fluoroelastomer composition of Example 10 was prepared by adding to an internal mixer (B-Banbury) 1500 grams (100 parts) of a terpolymer of vinylidene fluoride, hexafluoropropylene and tetrafluoroethylene (45/30/25 percent by weight) having a Mooney Viscosity, $ML_{1+10}$ at 121°C of 65, 375 grams (25 parts) of MT carbon black, 45 grams (3 parts) of magnesium hydroxide, 30 grams (2 parts) of calcium hydroxide, 4.5 grams (0.3 parts) of the vulcanization accelerator tetrabutylammonium hydrogen sulfate (micronized), 12 grams (0.8 parts) of the crosslinking agent hydroguinone (micronized), 7.5 grams (0.5 parts) of Carnauba Wax and 0.75 grams (0.05 parts) of tetrabutylammonium bromide adhesion promoter. The compound was mixed until a chart temperature of 104°C was reached in about 2.5 minutes. The compound was then discharged from the mixer and placed on a two-roll rubber mill which was used to prepare the sheet stock.

In a similar manner, fluoroelastomer Examples 11-13 were prepared as described above except these examples contained 1.5 grams, 3.0 grams, and 7.5 grams, respectively (0.1, 0.2, and 0.5 parts, respectively) of tetrabutylammonium bromide used in Example 7. General physical properties and adhesion values for Examples 10-13 are shown in Table 3.

In Control Example 5 an experiment was conducted according to the procedure outlined for Example 10 but without the addition of the metal adhesion promoter tetrabutylammonium bromide. General physical properties and adhesion values for Control Example 5 are shown in Table 3.

A comparison of Examples 10-13 with Control Example 5 revealed that the adhesion properties of the compositions generally increased with the addition of the tetraalkylammonium bromide for terpolymers including vinylidene fluoride.

Example 14

The procedure described above in Example 10 was repeated except that 3.0 grams (0.2 parts) of tetrabutylammonium iodide was used in place of tetrabutylammonium bromide. The general physical properties were similar to those in Table 3 and the sample had a "hot" adhesion value of 4 and a "cold" adhesion value of 5.

Example 15

The procedure described above in Example 10 was repeated except that 3.0 grams (0.2 parts) of tetrabutylammonium chloride was used in place of tetrabutylammonium bromide. The general physical properties were similar to those in Table 3 and the sample had a "hot" adhesion value of 4 and a "cold" adhesion value of 5.

Examples 14 and 15 demonstrate that the adhesion promoter is also effective versus Control Example 5 when the halide substituent is iodide or chloride.

TABLE 1

| EXAMPLE | CONTROL EX. 1 | EX. 1 | EX. 2 | EX. 3 | EX. 4 |
|---|---|---|---|---|---|
| Tetrabutylammonium bromide | | | | | |
| parts per 100 parts fluoroelastomer | 0.00 | 0.05 | 0.1 | 0.2 | 0.5 |
| Cure Rate by Oscillating Disk Rheometer | | | | | |
| ASTM D-2084; 177° 3 deg arc minimum torque, Nm | 2.0 | 2.1 | 2.1 | 2.3 | 2.9 |
| ts0.2, min | 2.2 | 2.1 | 2.1 | 1.8 | 1.0 |
| t50, min | 3.7 | 3.3 | 3.3 | 2.8 | 1.6 |
| t90, min | 5.5 | 4.0 | 4.2 | 3.5 | 2.3 |
| maximum torque, Nm | 11.0 | 11.2 | 11.1 | 11.2 | 10.5 |
| Properties | | | | | |
| Press cure at 190°C for 5 min Post cure at 200°C for 24 hr | | | | | |
| Hardness, Durometer A (ASTM D-2240) | 74 | 73 | 75 | 76 | 75 |
| Stress Strain Properties (ASTM D-412) | | | | | |
| 100% Modulus, MPa | 4.4 | 4.3 | 4.6 | 4.6 | 4.9 |
| Tensile Strength, MPa | 11.4 | 10.3 | 11.2 | 10.3 | 11.6 |
| Elongation at Break, % | 275 | 250 | 275 | 240 | 265 |
| Compression Set (ASTM D-395, plied pellets) | | | | | |
| 150°C/70 hr | 19 | 20 | 20 | 22 | 33 |
| 200°C/70 hr | 30 | 31 | 32 | 35 | 41 |
| Metal Adhesion | | | | | |
| Hot | 1 | 3 | 4 | 4 | 4 |
| Cold | 1 | 4 | 5 | 5 | 5 |

TABLE 2

| EXAMPLE | CONTROL EX.2 | EX. 7 | CONTROL EX.3 | EX. 8 | CONTROL EX.4 | EX. 9 |
|---|---|---|---|---|---|---|
| Composition,phr | | | | | | |
| Tetrabutylammonium fluoride | 0.5 | 0.5 | - | - | - | - |
| Tetrabutylammonium dihydrogen phosphate | - | - | 0.5 | 0.5 | - | - |
| Tetrabutylammonium periodate | - | - | - | - | 0.5 | 0.5 |
| Tetrabutylammonium bromide | - | 0.2 | - | 0.2 | - | 0.2 |
| Properties | | | | | | |
| Press cure at 190°C for 5 min | | | | | | |
| Post cure at 200°C for 24 hr | | | | | | |
| Hardness, Durometer A (ASTM D-2240) | 72 | 73 | 72 | 73 | 71 | 72 |
| Stress Strain Properties (ASTM D-412) | | | | | | |
| 100% Modulus, MPa | 3.7 | 3.4 | 3.8 | 3.9 | 3.4 | 3.6 |
| Tensile Strength, MPa | 11.7 | 10.8 | 8.5 | 10.2 | 9.4 | 10.5 |
| Elongation at Break, % | 350 | 340 | 260 | 305 | 280 | 285 |
| Compression Set (ASTM D-395, plied pellets) | | | | | | |
| 150°C/70 hr | 24 | 30 | 25 | 29 | 19 | 24 |
| 200°C/70 hr | 35 | 43 | 34 | 40 | 27 | 35 |
| Metal Adhesion | | | | | | |
| Hot | 1 | 2 | 2 | 4 | 3 | 4 |
| Cold | 2 | 4 | 3 | 5 | 4 | 5 |

TABLE 3

| EXAMPLE | CON-TROL EX.5 | EX. 10 | EX. 11 | EX. 12 | EX. 13 |
|---|---|---|---|---|---|
| Tetrabutylammonium bromide parts per 100 parts fluoroelastomer | - | 0.05 | 0.1 | 0.2 | 0.5 |
| Cure Rate by Oscillating Disk Rheometer ASTM D-2084; 177°C, 3 deg arc | | | | | |
| minimum torque, Nm | 2.5 | 2.2 | 2.2 | 2.2 | 2.5 |
| ts0.2, min | 1.8 | 2.1 | 1.9 | 1.6 | 1.3 |
| t50, min | 4.4 | 5.0 | 4.4 | 4.0 | 3.4 |
| t90, min | 8.0 | 8.4 | 7.2 | 6.6 | 6.1 |
| maximum torque, Nm | 10.7 | 9.8 | 9.9 | 10.0 | 10.3 |
| Properties Press cure at 190°C for 5 min Post cure at 200°C for 24 hr | | | | | |
| Hardness, Durometer A (ASTM D-2240) | 71 | 72 | 71 | 73 | 74 |
| Stress Strain Properties (ASTM D-412) | | | | | |
| 100% Modulus, MPa | 4.2 | 3.8 | 3.8 | 4.0 | 4.0 |
| Tensile Strength, MPa | 10.3 | 9.8 | 10.2 | 9.7 | 9.7 |
| Elongation at Break, % | 250 | 160 | 290 | 275 | 275 |
| Compression Set (ASTM D-395, plied pellets) | | | | | |
| 150°C/70 hr | 17 | 19 | 20 | 23 | 19 |
| 200°C/70 hr | 25 | 27 | 30 | 32 | 37 |
| Metal Adhesion | | | | | |
| Hot | 1 | 2 | 2 | 3 | 3 |
| Cold | 2 | 4 | 5 | 5 | 4 |

## Claims

**1.** A fluoroelastomer composition that has enhanced adhesion to metal when cured which comprises:
(a) an elastomeric copolymer of vinylidene fluoride and at least one other fluorinated monomer;

(b) 0.1 to 5 parts by weight of a crosslinking agent selected from a bisphenol and a polyhydroxy phenol of the formula

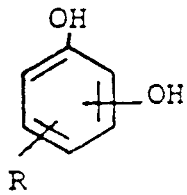

or

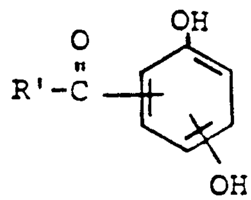

where R is hydrogen, alkyl or aryl and R' is alkyl or aryl;

(c) 0.1 to 3 parts by weight of a crosslinking accelerator which is a quaternary ammonium salt of the formula $R''_4N^+X^-$ wherein each R'' is independently an alkyl group of 2-10 carbon atoms or an aryl group of 7-10 carbon atoms and $X^-$ is selected from fluoride, dihydrogen phosphate, periodate, acetate, hydrogen sulfate, methane sulfonate and toluene sulfonate;

(d) 0.5 to 20 parts by weight of an acid acceptor which is at least one divalent metal oxide or hydroxide; and

(e) 0.02-0.8 parts by weight of a metal adhesion promoter which is a tetraalkylammonium halide where each alkyl group contains 2-10 carbon atoms and the halide is chloride, bromide or iodide,

the crosslinking agent (b) and the crosslinking accelerator (c) optionally having been prereacted in a 1/1 molar ratio, all parts by weight being based on 100 parts by weight of the elastomeric copolymer (a).

**2.** A composition according to claim 1, wherein the elastomeric copolymer (a) comprises a terpolymer of vinylidene fluoride, hexafluoropropylene and a comonomer selected from perfluoro(alkyl vinyl ether) and tetrafluoroethylene.

**3.** A composition according to claim 1, wherein the elastomeric copolymer (a) comprises vinylidene fluoride and hexafluoropropylene.

**4.** A composition according to claim 1, 2 or 3 wherein the crosslinking agent (b) is 4,4′-hexafluoroisopropylidene diphenol, 4,4′-dihydroxy-diphenyl sulfone, 4,4′-dihydroxybenzophenone, 2,4-dihydroxy- benzophenone or hydroquinone.

**5.** A composition according to any one of the preceding claims wherein the crosslinking accelerator (c) is a tetraalkylammonium salt wherein each R'' is independently an alkyl group of 2 to 4 carbon atoms.

**6.** A composition according to claim 5 wherein each R'' is n-butyl.

**7.** A composition according to claim 6 wherein the crosslinking accelerator (c) is tetrabutylammonium hydrogen sulfate.

**8.** A composition according to any one of the preceding claims wherein the acid acceptor (d) is magnesium or calcium oxide or barium or calcium hydroxide.

**9.** A composition according to any one of the preceding claims wherein the metal adhesion promoter (e) is tetrabutylammonium bromide, chloride or iodide.

**10.** A composition according to any one of the preceding claims wherein the amount of metal adhesion promoter (e) is from 0.05-0.2 parts by weight per hundred parts of elastomeric copolymer (a).

**11.** A process for providing a metal substrate with an adherent coating which comprises applying a composition as claimed in any one of the preceding claims to a surface of the metal substrate and curing the composition.

**Patentansprüche**

1. Fluorelastomer-Zusammensetzung mit verbesserter Haftung an Metall nach dem Härten, umfassend:
   (a) ein elastomeres Copolymer aus Vinylidenfluorid und wenigstens ein anderes fluoriertes Monomer;
   (b) 0,1 bis 5 Gewichtsteile eines Vernetzungsmittels, ausgewählt aus einem Bisphenol und einem Polyhydroxyphenol der Formel

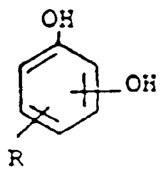

oder

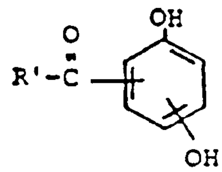

   worin R Wasserstoff, Alkyl oder Aryl ist und R' Alkyl oder Aryl ist;
   (c) 0,1 bis 3 Gewichtsteile eines Vernetzungsbeschleunigers, der ein quartäres Ammoniumsalz der Formel $R''_4\ N^+X^-$ ist, worin jedes R'' unabhängig voneinander eine Alkylgruppe mit 2-10 Kohlenstoffatomen oder eine Arylgruppe mit 7-10 Kohlenstoffatomen ist, und $X^-$ ausgewählt ist aus Fluorid, Dihydrogenphosphat, Periodat, Acetat, Hydrogensulfat, Methansulfonat und Toluolsulfonat;
   (d) 0,5 bis 20 Gewichtsteile eines Säureakzeptors, der wenigstens ein zweiwertiges Metalloxid oder -hydroxid ist; und
   (e) 0,02-0,8 Gewichtsteile eines Metalladhäsionsaktivators, der ein Tetraalkylammoniumhalogenid ist, worin jede Alkylgruppe 2-10 Kohlenstoffatome enthält, und das Halogenid Chlorid, Bromid oder Iodid ist;

   wobei das Vernetzungsmittel (b) und der Vernetzungsbeschleuniger (c) wahlweise in einem 1:1-Stoffmengenverhältnis vorher zur Reaktion gebracht wurden; alle Gewichtsteile auf 100 Gewichtsteile des elastomeren Copolymers (a) bezogen sind.

2. Zusammensetzung gemäß Anspruch 1, worin das elastomere Copolymer (a) ein Terpolymer aus Vinylidenfluorid, Hexafluorpropylen und einem Comonomer, ausgewählt aus Perfluor(alkylvinylether) und Tetrafluorethylen, umfaßt.

3. Zusammensetzung gemäß Anspruch 1, worin das elastomere Copolymer (a) Vinylidenfluorid und Hexafluorpropylen umfaßt.

4. Zusammensetzung gemäß Anspruch 1, 2 oder 3, worin das Vernetzungsmittel (b) 4,4'-Hexafluorisopropylidendiphenol, 4,4'-Dihydroxydiphenylsulfon, 4,4'-Dihydroxybenzophenon, 2,4-Dihydroxybenzophenon oder Hydrochinon ist.

5. Zusammensetzung gemäß irgendeinem der vorhergehenden Ansprüche, worin der Vernetzungsbeschleuniger (c) ein Tetraalkylammoniumsalz ist, worin jedes R'' unabhängig voneinander eine Alkylgruppe mit 2 bis 4 Kohlenstoffatomen ist.

6. Zusammensetzung gemäß Anspruch 5, worin jedes R'' n-Butyl ist.

7. Zusammensetzung gemäß Anspruch 6, worin der Vernetzungsbeschleuniger (c) Tetrabutylammoniumhydrogensulfat ist.

8. Zusammensetzung gemäß irgendeinem der vorhergehenden Ansprüche, worin der Säureakzeptor (d) Magnesium- oder Calciumoxid oder Barium- oder Calciumhydroxid ist.

9. Zusammensetzung gemäß irgendeinem der vorhergehenden Ansprüche, worin der Metalladhäsionsaktivator (e) Tetrabutylammoniumbromid, -chlorid oder -iodid ist.

**10.** Zusammensetzung gemäß irgendeinem der vorhergehenden Ansprüche, worin die Menge an Metalladhäsionsaktivator (e) 0,05-0,2 Gewichtsteile pro 100 Gewichtsteile des elastomeren Copolymers (a) ist.

**11.** Verfahren zur Bereitstellung eines Metallsubstrats mit einer haftenden Beschichtung, umfassend das Aufbringen einer Zusammensetzung, wie sie gemäß irgendeinem der vorhergehenden Ansprüche beansprucht wird, auf die Oberfläche des Metallsubstrats und Härten der Zusammensetzung.

## Revendications

**1.** Une composition de fluoroélastomère qui présente une adhérence améliorée à un métal après durcissement qui comprend :

(a) un copolymère élastomère de fluorure de vinylidène et d'au moins un autre monomère fluoré;

(b) 0,1 à 5 parties en poids d'un agent réticulant choisi parmi un bisphénol et un polyhydroxy phénol de formule:

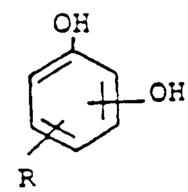

ou

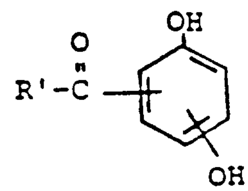

où R est l'hydrogène, un radical alkyle ou aryle et R' est un radical alkyle ou aryle;

(c) 0,1 à 3 parties en poids d'un accélérateur de réticulation qui est un sel d'ammonium quaternaire de formule $R''_4N^+H^-$ dans laquelle chaque R'' est indépendamment un groupement alkyle de 2-10 atomes de carbone ou un groupement aryle de 7-10 atomes de carbone et $X^-$ est choisi parmi les ions fluorure, dihydrogèno phosphate, periodate, acétate, hydrogèno sulfate, méthane sulfonate et toluène sulfonate;

(d) 0,5 à 20 partie en poids d'un accepteur d'acide qui est au moins un oxyde ou un hydroxyde de métal divalent; et

(e) 0,02-0,8 parties en poids d'un agent favorisant l'adhérence à un métal qui est un halogénure de tétraalkylammonium dans lequel chaque groupement alkyle contient 2-10 atomes de carbone et l'halogènure est un chlorure, un bromure ou un iodure, l'agent réticulant (b) et l'accélérateur de réticulation (c) ayant optionnellement préréagi dans un rapport molaire de 1/1, toutes les parties en poids étant basées sur 100 parties en poids du copolymère élastomère (a).

**2.** Une composition selon la revendication 1, dans laquelle le copolymère élastomère (a) comprend un terpolymère de fluorure de vinylidène, d'hexafluoropropylène et d'un comonomère choisi parmi le perfluoro(alkyl vinyl éther) et le tétrafluoroéthylène.

**3.** Une composition selon la revendication 1, dans laquelle le copolymère élastomère (a) comprend du fluorure de vinylidène et de l'hexafluoropropylène.

**4.** Une composition selon la revendication 1, 2, ou 3 dans laquelle l'agent de réticulation (b) est le 4,4'-hexafluoroisopropylidène diphénol, la 4,4'-dihydroxydiphényl sulfone, la 4,'4-dihydroxybenzophénone, la 2,4-dihydroxybenzophénone ou l'hydroquinone.

**5.** Une composition selon l'une quelconque des revendications précédentes dans laquelle l'accélérateur de réticulation (c) est un sel de tétraalkylammonium dans lequel chaque R'' est indépendamment un groupement alkyle de 2 à 4 atomes de carbone.

**6.** Une composition selon la revendication 5 dans laquelle chaque R'' est un radical n-butyle.

**7.** Une composition selon la revendication 6 dans laquelle l'accélérateur de réticulation (c) est l'hydrogèno sulfate de tétrabutylammonium .

**8.** Une composition selon l'une quelconque des revendications précédentes dans laquelle l'accepteur d'acide (d) est de l'oxyde de magnésium ou de calcium ou de l'hydroxyde de baryum ou de calcium.

**9.** Une composition selon l'une quelconque des revendications précédentes dans laquelle l'agent favorisant l'adhérence à un métal (e) est le bromure, chlorure ou iodure de tétrabutylammonium .

**10.** Une composition selon l'une quelconque des revendications précédentes dans laquelle l'agent favorisant l'adhérence à un métal (e) représente de 0,05-0,2 parties en poids pour cent parties du copolymère élastomère (a).

**11.** Un procédé d'obtention d'un substrat de métal avec un revêtement adhérent qui comprend l'application d'une composition telle que revendiquée dans l'une quelconque des revendications précédentes à une surface d'un substrat de métal et le durcissement de la composition.